# EUROPEAN PATENT SPECIFICATION

(11) **EP 4 009 493 B1**
(45) Date of publication and mention of the grant of the patent: **09.09.2026**
(21) Application number: 20210943.5
(22) Date of filing: 01.12.2020
(51) Int. Cl.: H02K 1/18, H02K 7/18, H02K 1/20, H02K 9/02, H02K 3/50

(54) **ELECTRIC GENERATOR INCLUDING A STATOR HAVING AN END PLATE**
ELEKTRISCHER GENERATOR MIT EINEM STATOR MIT EINER ENDPLATTE
GÉNÉRATEUR ÉLECTRIQUE COMPRENANT UN STATOR DOTÉ D'UNE PLAQUE D'EXTRÉMITÉ

(43) Date of publication of application: 08.06.2022
(73) Proprietor: Siemens Gamesa Renewable Energy A/S, 7330 Brande (DK)
(72) Inventor: Djukic, Nenad, 2450 København SV (DK)
(74) Representative: SGRE-Association

(56) References cited:
- EP-A1- 3 509 188
- WO-A1-2020/135942
- GB-A- 549 650
- US-A- 3 238 404
- US-A- 3 978 359

## Description

### Field of invention

The present invention relates to an electric generator including a stator having at least an end plate. Particularly, but not exclusively, the present invention may be efficiently applied to an electric generator of a wind turbine.

### Art Background

An electric generator, such as an electric generator installed in a wind turbine, typically comprises a rotor which rotates relative to a stator. A similar electrical machine is known from US 3 978 359 A.

The stator normally comprises a frame body longitudinally extending along a longitudinal axis and including a stator yoke and a plurality of teeth protruding according to a radial direction from the stator yoke to respective tooth radial ends. The frame body may include a lamination structure. Each tooth extends also longitudinally between a first longitudinal end and a second longitudinal end. In the stator a plurality of slots is also defined, each slot being delimited circumferentially by two adjacent teeth and radially extending between the stator yoke and the respective tooth radial ends. Each slot houses the respective coils of a winding. End plates may be provided at the teeth longitudinal ends, at the drive end and/or the non-drive end. The drive end (DE) is the longitudinal end, which is connected to the driving device (i.e. the rotor with blades of the wind turbine) and is longitudinally opposite non-drive end (NDE). The end plates mechanically support the lamination of the stator frame body and in particular the teeth during manufacturing and operation. The end plate may also have the function of applying an axial pressure to the stator lamination structure. The end plates may have a typical finger shape for following the shape of the stator teeth and establishing pressure on the stator lamination teeth.

The end plates are characterized by a plurality of inconvenience. End plates are passive parts, which do not bring to energy production, but act as heaters. Eddy-current losses are therefore created in the end plates plate causing the heating (wasted power) and thus lowering generator efficiency. Being provided at the stator longitudinal ends, the end plates are close to the coil heads of the windings provided in the stator. Power loss due to axial leakage flux from the coil heads is adding to the main flux generating additional heating, thus adding to additional losses that may be not considered during design loss calculation. Further, known-in-the-art designs of stator bodies may include steel end plate made as a uniform single part, e.g. a thick steel plate. Such steel end plates may be kept in place by the large number of bolt extenders, bolts, nuts and washers. This adds to the cost of the stator. Being provided at the stator longitudinal ends, the end plates provides resistance to the cooling air entering the airgap between the rotor and the stator. This increases the air pressure drop, thus reducing cooling efficiency.

Therefore, there is a need to provide an improved design for a stator of an electric generator having one or more end plates, which permits to reduce the above described inconveniences associated, at the same time providing the necessary mechanical support for the teeth of the stator.

### Summary of the invention

This need may be met by the subject matter according to the independent claim. Advantageous embodiments of the present invention are described by the dependent claims.

According to the present invention, it is provided a stator for an electric generator. The stator comprises:
- a stator body including a stator yoke and a plurality of teeth protruding according to a radial direction orthogonal to the longitudinal axis from the stator yoke to respective tooth radial ends, each tooth extending longitudinally between the first longitudinal end and the second longitudinal end,
- at least one end plate for longitudinally supporting the stator body at the first longitudinal end and/or the second longitudinal end.

The end plate longitudinally extends between a first end surface adjacent to the stator body and a longitudinally opposite second end surface, the second end surface having a lower radial extension than the first end surface.

An electric generator including the above described stator may be advantageously integrated in a wind turbine.

According to the end plate design of the present invention, an efficiency improvement of the generator and turbine are achieved. Reduction of losses is achieved by removal of excess parts and/or using the present invention for replacing traditional end plates in known-in-art design(s). The shape of the end plate provides improved cooling.

According to embodiments of the invention, the first end surface and the second end surface are connected by an edge profile having at least a curved portion or a planar portion or a stepped portion.

The end plate may comprise a plurality of laminations stacked along the longitudinal axis. Efficiency improvement and optimized design are realized via implementation of the laminations instead of full steel end plate, which eliminates eddy-current losses from the end plate. The lamination stack, which is used instead of the full steel end plate is an active part, which contributes to the energy production since it is used both as a last lamination stack of the stator and as an end plate for providing mechanical support for the teeth of the stator. Cost saving is achieved through improved efficiency and higher energy production. Simplicity is achieved by utilizing only one component, i.e. the laminations to build the stator body and the end plates.

According to possible embodiments of the invention, the laminations have increasing outer dimeters from the second end surface to the first end surface. The first end surface and the second end surface are connected by a stepped edge profile, each step of the stepped profile having a longitudinal width corresponding to the width of one lamination or a plurality of laminations. The implementation of steps reduces axial flux losses in the end plates and the stack below it.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a schematic section of a wind turbine including an electric generator according to the present invention.
- Figure 2: shows a schematic axonometric view of the electric generator of figure 1.
- Figure 3: shows a schematic longitudinal section of the stator of the electric generator of figure 2.
- Figure 4: shows a detail of figure 3, illustrating a component of the stator according to the present invention.
- Figure 5: shows another embodiment of the component of figure 4.
- Figure 6: shows a further embodiment of the component of fig-ure 4.

### Detailed Description

The illustrations in the drawings are schematic. It is noted that in different figures, similar or identical elements are provided with the same reference signs.

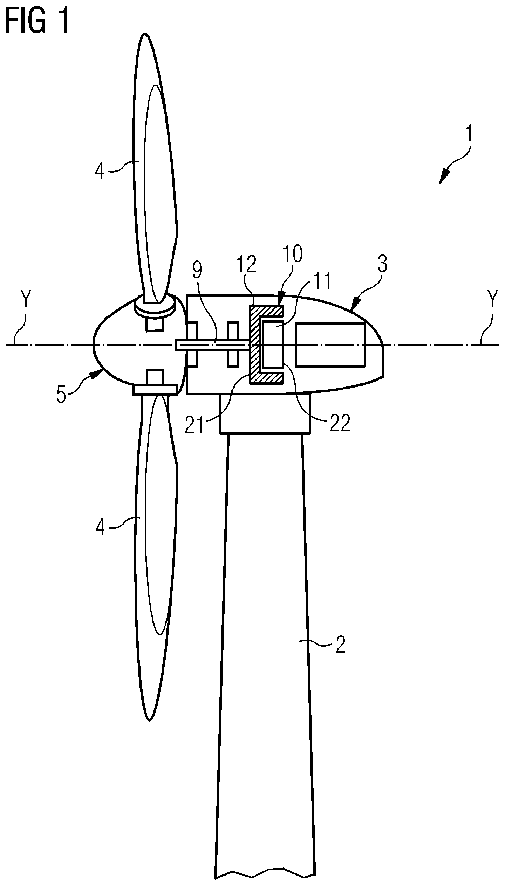

**Figure** 1 shows a wind turbine 1 according to the invention. The wind turbine 1 comprises a tower 2, which is mounted on a non-depicted foundation. A nacelle 3 is arranged on top of the tower 2. The wind turbine 1 further comprises a wind rotor 5 having two, three or more blades 4 (in the perspective of Figure 1 only two blades 4 are visible). The wind rotor 5 is rotatable around a rotational axis Y. When not differently specified, the terms axial, radial and circumferential in the following are made with reference to the rotational axis Y.

The rotational axis Y may coincide with the stator longitudinal axis Y. The blades 4 extend radially with respect to the rotational axis Y. The wind turbine 1 comprises an electrical generator 10. The wind rotor 5 is rotationally coupled with the electrical generator 10 by means of a rotatable main shaft 9. According to other possible embodiments of the present invention (not represented in the attached figures), the wind rotor 5 is rotationally coupled directly with the electrical generator 10 (direct-drive generator configuration). The electrical generator 10 extends longitudinally between a drive end 21 connected to the wind rotor 5 and an opposite non-drive end 22. The electrical generator 10 includes a stator 11 and a rotor 12. The rotor 12 is radially external to the stator 11 and is rotatable with respect to the stator 11 about the rotational axis Y. According to other embodiments of the present invention (not shown) the rotor 12 is radially internal to the stator 11.

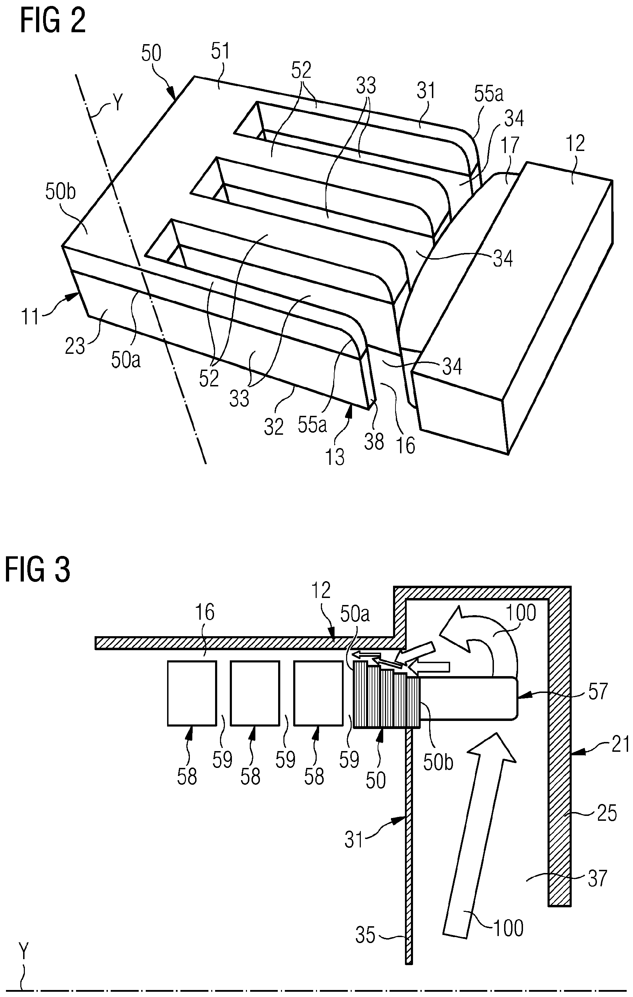

**Figure 2** shows a more detailed schematical view of the stator 11 and the rotor 12 of the electrical generator 10. A plurality of permanent magnets 17 (only one permanent magnet 17 is shown in figure 2) are attached on a face of the rotor 12 facing the stator 11. According to possible embodiments of the present invention, the magnets 17 are not present in the rotor 12 and windings are instead provided. An air gap 16, which extends circumferential around the axis Y, is provided between the rotor 12 and the stator 11 and, in particular, between the permanent magnets 17 and the stator 11. The rotor 12 and the permanent magnets 17 are not a specific part of the present invention and therefore not described in further detail. The present invention can be therefore adapted to electrical generators or electrical motors with or without permanent magnets. The stator 11 comprises a stator body 13 longitudinally extending along the longitudinal axis Y, between a first longitudinal end 31 and a second longitudinal end 32. The stator 11 has a conventional lamination structure including a plurality of laminations stacked along the longitudinal axis Y. The stator body 13 includes a stator yoke 23 and a plurality of teeth 33 protruding according to a radial direction orthogonal to the longitudinal axis Y from the stator yoke 23 to respective tooth radial ends 38, each tooth extending longitudinally between the first longitudinal end 31 and the second longitudinal end 32. A plurality of slots 34 are circumferentially interposed between the teeth 33 for housing the coils of a winding (not shown). The stator 11 further comprises an end plate 50 for axially supporting the plurality of laminations of the stator body 11 at the first longitudinal end 31. Another end plate 50 (not shown) may be provided at the second longitudinal end 32. The end plate 50 is finger-shaped, the end plate 50 including a plate yoke 51 adjacent to the stator yoke 23 and a plurality of plate teeth 52 protruding from the plate yoke 51 according to the radial direction. Each plate tooth 52 of the end plate 50 is adjacent to a respective tooth 33 of the stator body 13, for providing longitudinal support. The end plate 50 longitudinally extends between a first end surface 50a adjacent to the stator body 13 and a longitudinally opposite second end surface 50b, the second end surface 50b having a lower radial extension than the first end surface 50a. In the embodiment of figure 2, the first end surface 50a and the second end surface 50b are connected by an edge profile 55a having a curved envelope.

The end plate 50 includes a plurality of laminations 60 stacked along the longitudinal axis Y for obtaining the edge profile 55a or other differently shaped edge profiles, as better specified in the following.

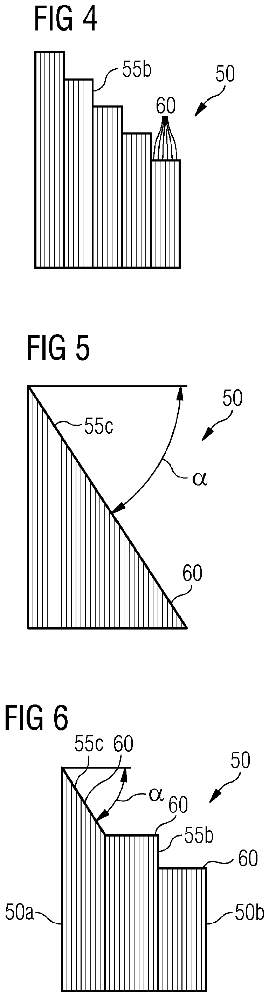

**Figure 3** shows a schematic longitudinal view of the stator 11 and the rotor 12 of the electrical generator 10. In the partial longitudinal view of figure 3 only the first longitudinal end 31 is shown. The stator 11 is housed inside a housing between two stator covers 25 or other parts of the rotor housing, respectively provided at the drive end 21 and at the non-drive end 22 (only the stator cover 25 at the drive end 21 is shown in figure 3). The stator body 13 includes a plurality of stator axial lamination stacks 58, two adjacent stator axial lamination stacks 58 being separated by a cooling duct 59 for letting a cooling fluid flow in the cooling duct 59, according to a radial direction, i.e. between the longitudinal axis Y and the tooth radial ends 38. Each stator lamination stack 58 is provided by stacking a plurality of laminations along the longitudinal axis Y. At the first longitudinal end 31, the end plate 50 is provided as final stator lamination stack including a plurality of laminations stacked along the longitudinal axis Y. At the second longitudinal end 32 (not shown), another end plate 50 may be provided. The laminations of the stator stacks 58 and of the end plate 50 have the same internal diameter. The laminations of the stator stacks 58 have the same external diameter. The laminations of the end plate 50 have a variable external diameter, which increases outer dimeters from the second end surface 50b to the first end surface 50a, as better illustrated in the following with reference to figures 4 to 6. The stator 11 comprises two stator support plates 35, respectively provided at the first and second longitudinal ends 31, 32 (only the stator support plate 35 at the first longitudinal end 31 is shown in figure 3), for radially supporting the stator body 13. The electrical generator 10 further comprises a cooling circuit for channeling a fluid cooling medium 100 to the air gap 16. The cooling circuit comprises a cooling cavity 37 between the stator support plate 35 at the first longitudinal end 31 and the stator cover 25 at the drive end 21. The cooling medium 100 is used for cooling the stator body 13, the support plates 35 and the coil heads 57, which axially protrudes from the stator body 13 in the cooling cavity 37. The cooling medium 100 is channeled in the cooling cavity 37 through the coil heads 57 and enters the air gap 16 axially by flowing over the end plate 50. The external shape of the end plate 50, whose diameter increases outer dimeters from the second end surface 50b to the first end surface 50a reduces the cooling air pressure drop along the cooling circuit, i.e. improved cooling and generator efficiency.

With reference to **Figures 4** to **6****,** three respective embodiments of the end plate 50 are shown. The end plate 50 comprises a stack of laminations 60. The end plate 50 may include self-bonding laminations, or other type of laminations, for example held together by interposed glue layers or other bonding means. With reference to the first embodiment of fig-ure 4, the first end surface 50a and the second end surface 50b of the end plate 50 are connected by a stepped edge profile 55b including a plurality of steps (five steps are shown in figure 4). Each step of the stepped edge profile 55b includes a plurality of laminations 60 (in the exemplary embodiment of figure 4 six laminations 60 are shown for each step) having the same external diameter. The external diameter of the steps increases from the second end surface 50b to the first end surface 50a. With reference to the second embodiment of figure 5, the first end surface 50a and the second end surface 50b of the end plate 50 are connected by a stepped edge profile 55c including a plurality of steps. Each step of the stepped edge profile 55c includes a single lamination 60. The external diameter of the lamination 60 increases continuously from the second end surface 50b to the first end surface 50a. In this second embodiment the laminations 60 are arranged in small steps, thus forming an edge profile having a mean inclination angle α with respect to a horizontal direction, the angle α being comprised between 0° and 90°. With reference to the third embodiment of figure 6, the first end surface 50a and the second end surface 50b of the end plate 50 are connected by a mixed edge profile 55c including a first stepped portion 55b similar to the first embodiment and a second stepped portion 55c similar to the second embodiment. Other not-shown embodiments, where the laminations 60 have external diameters increasing from the second end surface 50b to the first end surface 50a, could be used. Embodiments may be derived as combinations or modifications of the above described embodiments, for example in one embodiment the first end surface 50a and the second end surface 50b of the end plate 50 are connected by a mixed edge profile 55c including a first stepped portion 55c similar to the second embodiment and a second stepped portion 55b similar to the first embodiment. Portions having a curved profile as in figure 2 may also be used. By using the laminations 60, it is possible to form an end plate 50 having the same structure of the axial stacks 58 of the stator body 13. This permits to achieve compactness and a simplified design.

## Claims

1. A stator (11) for an electric generator (10) extending along a longitudinal axis (Y) between a first longitudinal end (31) and a second longitudinal end (32), the stator (11) comprising:
- a stator body (13) including a stator yoke (23) and a plurality of teeth (33) protruding according to a radial direction orthogonal to the longitudinal axis (Y) from the stator yoke (23) to respective tooth radial ends (38), each tooth extending longitudinally between the first longitudinal end (31) and the second longitudinal end (32),
- at least one end plate (50) for longitudinally supporting the stator body (11) at the first longitudinal end (31) and/or the second longitudinal end (32),
wherein end plate (50) longitudinally extends between a first end surface (50a) adjacent to the stator body (13) and a longitudinally opposite second end surface (50b), the second end surface (50b) having a lower radial extension than the first end surface (50a) **characterized in that**
the end plate (50) comprises a plurality of laminations (60) stacked along the longitudinal axis (Y),
wherein the laminations (60) have increasing outer diameters from the second end surface (50b) to the first end surface (50a).

2. The stator (11) as claimed in claim 1, wherein the first end surface (50a) and the second end surface (50b) are connected by an edge profile (55a, 55b, 55c) having at least a curved portion or a planar portion or a stepped portion.

3. The stator (11) as claimed in claim 1 or 2, wherein the first end surface (50a) and the second end surface (50b) are connected by a stepped edge profile (55c), each step of the stepped profile having a longitudinal width corresponding to the width of one lamination (60).

4. The stator (11) as claimed in claim 1 to 2, wherein the first end surface (50a) and the second end surface (50b) are connected by a stepped edge profile (55b) each step of the stepped profile having a longitudinal width corresponding to the width of a plurality of laminations (60).

5. An electric generator (10) comprising a stator (11) according to any of the previous claims.

6. A wind turbine (1) including an electric generator (10) according to the previous claim.

## Patentansprüche

1. Stator (11) für einen elektrischen Generator (10), der sich entlang einer Längsachse (Y) zwischen einem ersten Längsende (31) und einem zweiten Längsende (32) erstreckt, wobei der Stator (11) Folgendes umfasst:
- einen Statorkörper (13), der ein Statorjoch (23) und eine Vielzahl von Zähnen (33) beinhaltet, die gemäß einer radialen Richtung orthogonal zur Längsachse (Y) von dem Statorjoch (23) zu jeweiligen radialen Zahnenden (38) vorstehen, wobei sich jeder Zahn längs zwischen dem ersten Längsende (31) und dem zweiten Längsende (32) erstreckt,
- mindestens eine Endplatte (50) zum längsverlaufenden Stützen des Statorkörpers (11) an dem ersten Längsende (31) und/oder dem zweiten Längsende (32),
wobei sich die Endplatte (50) längs zwischen einer ersten Endfläche (50a) benachbart zu dem Statorkörper (13) und einer längs gegenüberliegenden zweiten Endfläche (50b) erstreckt, wobei die zweite Endfläche (50b) eine kleinere radiale Ausdehnung als die erste Endfläche (50a) aufweist, **dadurch gekennzeichnet, dass** die Endplatte (50) eine Vielzahl von Blechen (60) umfasst, die entlang der Längsachse (Y) gestapelt sind,
wobei die Bleche (60) von der zweiten Endfläche (50b) zu der ersten Endfläche (50a) zunehmende Außendurchmesser aufweisen.

2. Stator (11) nach Anspruch 1, wobei die erste Endfläche (50a) und die zweite Endfläche (50b) durch ein Kantenprofil (55a, 55b, 55c) verbunden sind, das mindestens einen gekrümmten Abschnitt oder einen planaren Abschnitt oder einen gestuften Abschnitt aufweist.

3. Stator (11) nach Anspruch 1 oder 2, wobei die erste Endfläche (50a) und die zweite Endfläche (50b) durch ein gestuftes Kantenprofil (55c) verbunden sind, wobei jeder Schritt des gestuften Profils eine Längsbreite aufweist, die der Breite eines Blechs (60) entspricht.

4. Stator (11) nach Anspruch 1 bis 2, wobei die erste Endfläche (50a) und die zweite Endfläche (50b) durch ein gestuftes Kantenprofil (55b) verbunden sind, wobei jede Stufe des gestuften Profils eine Längsbreite aufweist, die der Breite einer Vielzahl von Blechen (60) entspricht.

5. Elektrischer Generator (10), umfassend einen Stator (11) nach einem der vorhergehenden Ansprüche.

6. Windturbine (1), beinhaltend einen elektrischen Generator (10) nach dem vorhergehenden Anspruch.

## Revendications

1. Stator (11) pour un générateur électrique (10) s'étendant le long d'un axe longitudinal (Y) entre une première extrémité longitudinale (31) et une seconde extrémité longitudinale (32), le stator (11) comprenant :
- un corps de stator (13) comprenant une culasse de stator (23) et une pluralité de dents (33) faisant saillie selon une direction radiale orthogonale à l'axe longitudinal (Y) depuis la culasse de stator (23) vers des extrémités radiales de dent (38) respectives, chaque dent s'étendant longitudinalement entre la première extrémité longitudinale (31) et la seconde extrémité longitudinale (32),
- au moins une plaque d'extrémité (50) pour supporter longitudinalement le corps de stator (11) au niveau de la première extrémité longitudinale (31) et/ou de la seconde extrémité longitudinale (32),
dans lequel la plaque d'extrémité (50) s'étend longitudinalement entre une première surface d'extrémité (50a) adjacente au corps de stator (13) et une seconde surface d'extrémité (50b) longitudinalement opposée, la seconde surface d'extrémité (50b) ayant une extension radiale inférieure à celle de la première surface d'extrémité (50a),
**caractérisé en ce que** la plaque d'extrémité (50) comprend une pluralité de tôles (60) empilées le long de l'axe longitudinal (Y),
dans lequel les tôles (60) ont des diamètres extérieurs croissants depuis la seconde surface d'extrémité (50b) vers la première surface d'extrémité (50a).

2. Stator (11) selon la revendication 1, dans lequel la première surface d'extrémité (50a) et la seconde surface d'extrémité (50b) sont reliées par un profil de bord (55a, 55b, 55c) ayant au moins une partie courbe ou une partie plane ou une partie étagée.

3. Stator (11) selon la revendication 1 ou 2, dans lequel la première surface d'extrémité (50a) et la seconde surface d'extrémité (50b) sont reliées par un profil de bord étagé (55c), chaque pas du profil étagé ayant une largeur longitudinale qui correspond à la largeur d'une tôle (60).

4. Stator (11) selon l'une des revendications 1 à 2, dans lequel la première surface d'extrémité (50a) et la seconde surface d'extrémité (50b) sont reliées par un profil de bord étagé (55b), chaque pas du profil étagé ayant une largeur longitudinale qui correspond à la largeur d'une pluralité de tôles (60).

5. Générateur électrique (10) comprenant un stator (11) selon l'une quelconque des revendications précédentes.

6. Éolienne (1) comprenant un générateur électrique (10) selon la revendication précédente.
